# EUROPEAN PATENT APPLICATION

(11) **EP 4 614 347 A1**
(43) Date of publication of application: **10.09.2025**
(21) Application number: 23890610.1
(22) Date of filing: 01.11.2023
(51) Int. Cl.: G06F 16/29

(54) **DISPLAY METHOD, STORAGE MEDIUM, AND TERMINAL DEVICE**

(30) Priority: 18.11.2022 CN 202211447784
(71) Applicant: Huawei Technologies Co., Ltd., Shenzhen, Guangdong 518129 (CN)
(72) Inventor: LU, Hongxiao, Shenzhen, Guangdong 518129 (CN)
(74) Representative: Gill Jennings & Every LLP
(86) International application number: PCT/CN2023/129123
(87) International publication number: WO 2024/104174

(57) **Abstract**

A display method, a storage medium, and a terminal device are provided. The method includes: After detecting that a user enables a tourist navigation function, the terminal device obtains current location coordinates of the user, and determines the current location coordinates. When detecting that the current location coordinates of the user are located on a tourist road, the terminal device separately displays a road interface for the tourist road, and displays, on the road interface, feature data corresponding to the tourist road. When detecting that the current location coordinates of the user are not located on any tourist road, the terminal device automatically queries a tourist road in a target range for the user, and returns a query result to the user.

## Description

This application claims priority to Chinese Patent Application No. 202211447784.3, filed with the China National Intellectual Property Administration on November 18, 2022 and entitled "DISPLAY METHOD, STORAGE MEDIUM, AND TERMINAL DEVICE", which is incorporated herein by reference in its entirety.

### TECHNICAL FIELD

This application relates to the field of intelligent terminal technologies, and in particular, to a display method, a storage medium, and a terminal device.

### BACKGROUND

A user can use a terminal device for map navigation. For example, after the user taps to start a map application on the terminal device, the map application can obtain a corresponding map interface based on location coordinates of the user, and display the map interface on a display of the terminal device for the user to view, so that the user can obtain the current location coordinates based on the map interface and follow map navigation instructions for direction navigation.

However, currently, information about a map interface presented by a map application is limited, and is usually limited to a basic road boundary, a bridge, a traffic condition, a text-based street name, a text-based building name, and the like. Content displayed on the map interface is simple, and content such as a related tourist attraction cannot be displayed on the map interface in real time based on location coordinates of the user. This is unfavorable to user experience.

### SUMMARY

Embodiments of this application provide a display method, a storage medium, and a terminal device. When detecting that current location coordinates of a user are located on a tourist road, the terminal device separately displays a road interface for the tourist road, and displays, on the road interface, feature data corresponding to the tourist road. In this way, the user can perform road navigation through the road interface displayed by the terminal device, and can also view, through the road interface, humanistic information of a tourist attraction related to the road. When detecting that the current location coordinates of the user are not located on any tourist road, the terminal device automatically queries a tourist road in a target range for the user, and returns a query result to the user. The user does not need to switch an interface for separate query, thereby improving user experience.

According to a first aspect, this application provides a display method, applied to a terminal device. The method includes: The terminal device displays a first navigation interface, where the first navigation interface includes a first road; and the terminal device moves to a first location in a moving process, and displays, on the first road on the first navigation interface, a first road feature corresponding to the first location.

In this embodiment of this application, the first navigation interface indicates a map interface of a map application presented on a display of the terminal device, for example, a map interface of an application 240 displayed on a display of a mobile phone 100. The first road indicates a tourist road on which the terminal device is currently located. The first location indicates current location coordinates of the terminal device located on the tourist road. The first road feature indicates road attraction data. When a user uses a map application and enables tourist navigation, after the terminal device determines that the user is currently located on a tourist road, the terminal device displays a road interface for the tourist road, and displays, on the road interface, road attraction data corresponding to the tourist road. This enables the user to perform road navigation through the road interface displayed by the terminal device, and also view, through the road interface, tourist attraction information related to the tourist road, thereby improving user experience.

In a possible implementation of the first aspect, the first road feature has a first feature location, and the method further includes: A first display location of the corresponding first road feature on the first road on the first navigation interface is determined based on the first feature location.

In this embodiment of this application, the first feature location indicates attraction location coordinates of the road attraction data. The terminal device determines a display manner and a display location of a rendering element of each piece attraction data on a display layer of the tourist road based on the attraction location coordinates of the road attraction data on the tourist road and current location coordinates of the user.

In a possible implementation of the first aspect, the first display location of the first road feature on the first road on the first navigation interface is determined in at least one of the following manners: The first display location of the corresponding first road feature on the first road on the first navigation interface is determined based on a connection line intersection point between the first feature location and the first road; and the first display location of the corresponding first road feature on the first road on the first navigation interface is determined based on a first distance between the first feature location and the first location.

In this embodiment of this application, for example, rendering elements of tourist attractions are sequentially superimposed, based on corresponding attraction location coordinates and horizontal and vertical lines of the tourist road, at intersection points between the corresponding horizontal and vertical lines and the tourist road. Alternatively, for example, a rendering element of road attraction data located in front of the current location coordinates of the user is displayed. For another example, the terminal device may display, on the display layer, a rendering element of a tourist attraction within a vertical distance of 2 kilometers or 500 meters, and determine, based on a distance of each tourist attraction, a display size of a corresponding rendering element, and the like.

In a possible implementation of the first aspect, that the terminal device moves to a first location in a moving process, and displays, on the first road on the first navigation interface, a first road feature corresponding to the first location includes: The first distance between the first location and the first feature location of the first road feature meets a first distance condition.

In this embodiment of this application, the first distance condition indicates road attraction data located in a preset range in front of the current location coordinates of the user. This avoids displaying a rendering element of a far tourist attraction or rendering elements of too many tourist attractions on the display layer, and correspondingly reduces time for the user to move from the current location coordinates to a location corresponding to the rendering element, so that the user can see a tourist attraction corresponding to a rendering element displayed by the mobile phone 100 in a short time, thereby improving user experience.

In a possible implementation of the first aspect, the method further includes: The terminal device moves from the first location to a second location, and hides the first road feature displayed on the first road on the first navigation interface.

In this embodiment of this application, when the user drives a vehicle to pass through a rendering element of a piece of road attraction data, so that the rendering element is located behind the current location coordinates of the user, the rendering element disappears from the display layer. Correspondingly, display duration of the rendering element of the tourist attraction on the display layer is shortened, thereby preventing the rendering element of the tourist attraction from blocking road display, and the like.

In a possible implementation of the first aspect, the method further includes: The first location is located on the first road.

In this embodiment of this application, the first location is located on the first road. A second location may be located on the first road, or a second location may not be located on the first road. For example, when the user drives a vehicle to pass through a rendering element of a piece of road attraction data, so that the rendering element is located behind the current location coordinates of the user, the user may be located on a corresponding tourist road, or the user may drive through the tourist road to be located on another road.

In a possible implementation of the first aspect, the first road includes the first road feature and a second road feature, and the method further includes: The first road feature corresponding to the first location and the second road feature are displayed on the first road on the first navigation interface.

In this embodiment of this application, the second road feature indicates city feature data and road culture data. The terminal device may display the city feature data and the road culture data on the first road on the first navigation interface. Alternatively, the terminal device may convert the road culture data into voice data, and play the voice data of the road culture data when displaying another first road feature and the second road feature.

In a possible implementation of the first aspect, the second road feature includes at least one of the following features: a city image feature, a city activity feature, a city tourism feature, a city historical feature, and a city humanistic feature.

In a possible implementation of the first aspect, the first road feature includes at least one of the following features: an architectural attraction feature and a natural landscape attraction feature.

In a possible implementation of the first aspect, the method further includes: The first road meets a first road condition, and the first road condition indicates that at least one first road feature is included.

In a possible implementation of the first aspect, that the first navigation interface includes a first road includes: The first road is separately displayed on the first navigation interface.

In this embodiment of this application, when the terminal device detects that the user enables tourist navigation, or determines that a current location of the user is located on a tourist road, a display mode of a map interface on the terminal device is a road navigation display interface. In addition, when the terminal device determines that the current location of the user is located on a tourist road, a navigation road displayed on the road navigation display interface is the tourist road, so that a display layer of the tourist road can be enlarged. In this way, when corresponding feature data is subsequently superimposed on the display layer, viewing of the navigation road by the user is not affected, thereby improving road navigation safety.

In a possible implementation of the first aspect, before the first navigation interface includes the first road, the method includes: A first road that meets the first road condition in a first range is queried based on a current location of the terminal device; and a query result is displayed on the first navigation interface.

In this embodiment of this application, the first range indicates a target range. The terminal device detects the current location coordinates of the user when the user uses the map application and enables tourist navigation. When detecting that the current location coordinates of the user are not located on any tourist road, the terminal device may obtain destination location coordinates of the user, actively query a tourist road in the target range for the user based on the current location coordinates and the destination location coordinates, and return a query result to the user, so that the user can choose whether to switch a navigation route. When the user performs map navigation, the terminal device can actively query the tourist road, and the user does not need to switch an interface for separate query, thereby improving user experience.

In a possible implementation of the first aspect, before the first navigation interface includes the first road, the method includes: A first navigation route is displayed on the first navigation interface; a second navigation route that meets a first query condition in a first range is queried based on the first navigation route, where the first query condition indicates that the second navigation route includes the first road; and a query result is displayed on the first navigation interface.

In a possible implementation of the first aspect, that a query result is displayed on the first navigation interface includes: The second navigation route and first navigation time of the second navigation route are displayed on the first navigation interface; or the second navigation route, first navigation time of the second navigation route, and the first navigation time of the second navigation route are displayed on the first navigation interface; or the second navigation route, and a time difference between first navigation time of the second navigation route and the first navigation time of the second navigation route are displayed on the first navigation interface.

In a possible implementation of the first aspect, the first range is determined in the following manner: The first range is determined based on an end location of the first navigation route and a current location of the terminal device.

In this embodiment of this application, a direction in which the user drives a vehicle is determined based on the end location of the first navigation route and the current location of the terminal device, and a tourist road in the target range is queried based on the direction in which the user drives a vehicle. The target range may be a tourist road in a range such as a distance of 2 kilometers or 10 kilometers from the current location coordinates, or the target range may be a tourist road in a range such as driving time of 10 minutes or 20 minutes from the current location coordinates.

In a possible implementation of the first aspect, the first range is determined in the following manner: A second distance between an end location of the first navigation route and a current location of the terminal device is obtained; and the first range is determined based on a first threshold and the second distance.

In this embodiment of this application, the target range is determined based on a dynamic threshold K and a distance L between the current location coordinates and the destination location coordinates. For example, the target range may be in a semi-circle range of 90 degrees to the left and right or may be in a sector range of 30 degrees to each of the left and right, which is in a direction of a connection line between the current location coordinates and a destination location and which is obtained by using a product of the distance L and the dynamic threshold K as a radius. The dynamic threshold K is any constant greater than 0 and less than or equal to 1. Long driving time for the user to switch a navigation route due to an excessively large target range can be avoided by limiting the dynamic threshold K. It may be understood that a queried target range is limited by using the dynamic threshold K, and driving time of a navigation route obtained through query is also limited by using the dynamic threshold K.

In a possible implementation of the first aspect, the first threshold is determined in the following manner: The first threshold is determined based on the second distance.

In this embodiment of this application, a value of the dynamic threshold K may be determined based on a value of the distance L. For example, when the distance L ranges from 0 to 5 kilometers, the dynamic threshold K is 0.2; or when the distance L ranges from 5 to 10 kilometers, the dynamic threshold K is 0.5.

According to a second aspect, an embodiment of this application provides a display apparatus. The display apparatus includes: a first display module, configured to display a first navigation interface of a terminal device, where the first navigation interface includes a first road; and a second display module, configured to: when the terminal device moves to a first location in a moving process, display, on the first road on the first navigation interface, a first road feature corresponding to the first location.

In this embodiment of this application, the first navigation interface indicates a map interface of a map application presented on a display of the terminal device, for example, a map interface of an application 240 displayed on a display of a mobile phone 100. The first road indicates a tourist road on which the terminal device is currently located. The first location indicates current location coordinates of the terminal device located on the tourist road. The first road feature indicates road attraction data. When a user uses a map application and enables tourist navigation, after the terminal device determines that the user is currently located on a tourist road, the first display module displays a road interface for the tourist road, and displays, on the road interface through the second display module, road attraction data corresponding to the tourist road. This enables the user to perform road navigation through the road interface displayed by the terminal device, and also view, through the road interface, tourist attraction information related to the tourist road, thereby improving user experience.

According to a third aspect, an embodiment of this application provides a readable storage medium. The readable storage medium stores instructions. When the instructions are executed on a terminal device, the terminal device is enabled to implement any display method provided in the first aspect and the possible implementations of the first aspect.

According to a fourth aspect, an embodiment of this application provides a terminal device. The terminal device includes: a memory, configured to store instructions executed by one or more processors of the terminal device; and a processor, where the processor is one of the processors of the terminal device, and is configured to execute the instructions stored in the memory, to implement any display method provided in the first aspect and the possible implementations of the first aspect.

According to a fifth aspect, an embodiment of this application provides a program product, where the program product includes instructions. When the instructions are executed by a terminal device, the terminal device may implement any display method provided in the first aspect and the possible implementations of the first aspect.

### BRIEF DESCRIPTION OF DRAWINGS

FIG. 1 is an example diagram of a communication system 10 according to some embodiments of this application;
FIG. 2A is an example diagram of a display interface for a road according to some embodiments of this application;
FIG. 2B is an example diagram of another display interface for a road according to some embodiments of this application;
FIG. 3A is a diagram of a structure of a terminal device 11 according to some embodiments of this application;
FIG. 3B is an example diagram of GPS positioning according to some embodiments of this application;
FIG. 3C is a diagram of another structure of a terminal device 11 according to some embodiments of this application;
FIG. 4A is a flowchart of steps of a display method according to some embodiments of this application;
FIG. 4B is a flowchart of steps of displaying feature data according to some embodiments of this application;
FIG. 5A is an example diagram of a display layer 40 according to some embodiments of this application;
FIG. 5B is an example diagram of a rendering element 54 according to some embodiments of this application;
FIG. 5C is an example diagram of a rendering element 51/52/53 according to some embodiments of this application;
FIG. 5D is an example diagram of a rendering element 55 according to some embodiments of this application;
FIG. 6A is an example diagram of a target sector range 61 according to some embodiments of this application;
FIG. 6B is an example diagram of a navigation route 62/63 according to some embodiments of this application;
FIG. 6C is an example diagram of a navigation route 63 according to some embodiments of this application;
FIG. 7A is a flowchart of steps of a navigation display method according to some embodiments of this application;
FIG. 7B is a flowchart of steps of another navigation display method according to some embodiments of this application; and
FIG. 8 is a diagram of a structure of a mobile phone 100 according to some embodiments of this application.

### DESCRIPTION OF EMBODIMENTS

Illustrative embodiments of this application include but are not limited to a display method, a storage medium, and a terminal device.

The following describes some embodiments of this application by using examples with reference to the accompanying drawings.

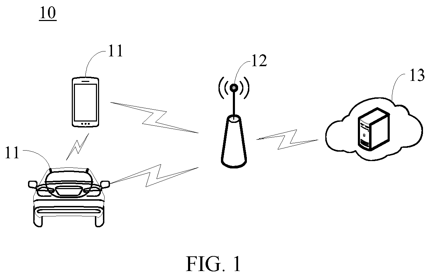

FIG. 1 is an example diagram of a communication system 10 according to some embodiments of this application.

As shown in FIG. 1, the communication system 10 includes a terminal device 11, an access device 12, and a network device 13. The terminal device 11 may establish a communication connection to the network device 13 by using the access device 12. A user may initiate a task request to the network device 13 by using the terminal device 11. For example, when the user performs a map navigation operation by using the terminal device 11, in response to the map navigation operation, the terminal device 11 obtains current location coordinates of the user, and initiates, to the network device 13, a task request related to map data query. The network device 13 may query corresponding map data based on the received current location coordinates of the user, and return the corresponding map data to the terminal device 11. In this way, the terminal device 11 may display, on a display, a map interface of the map data for the user to view, and the terminal device 11 may alternatively convert the map data into voice data that is played for the user to listen, or the like.

In some embodiments, the communication system 10 may include a plurality of terminal devices 11. For example, the terminal devices 11 shown in FIG. 1 may include a mobile phone and a vehicle-mounted device in a vehicle. The plurality of terminal devices 11 may establish communication connections between the plurality of terminal devices 11 by using the access device 12, or may establish communication connections between the plurality of terminal devices 11 in a wired connection manner. For example, the mobile phone may establish a wireless communication connection to the vehicle-mounted device by using the access device 12, the mobile phone may establish a wired communication connection to the vehicle-mounted device in a data line connection manner, or the like.

It may be understood that in a driving process, the user may directly perform map navigation by using the mobile phone, or may perform map navigation by using the vehicle-mounted device after the communication connection is established between the mobile phone and the vehicle-mounted device. This is not specifically limited.

Further, the access device 12 may be any device that supports a wireless transceiver function, including but not limited to an evolved base station, a base station in a 5G communication system, a base station in a future communication system, an access node in a wireless fidelity (Wireless Fidelity, Wi-Fi) system, a wireless relay node, a wireless backhaul node, and the like. The network device 13 may be any single server having storage space, or may be a server cluster including a plurality of servers. The network device 13 stores map data corresponding to different location coordinates, including but not limited to a 2D map, a 3D map, a heat map, a satellite map, a topographic map, an indoor map, a bus map, a high-definition map, a lane-level road map, and the like.

In some embodiments, the terminal device 11 may determine display modes of interfaces of the foregoing maps based on different state modes. For example, when detecting that the user selects a driving state mode to perform a navigation operation, the terminal device 11 may switch a full map display interface to a driving road navigation display interface. When detecting that the user selects a riding/walking state mode to perform a navigation operation, the terminal device 11 may switch a full map display interface to a riding/walking road navigation display interface, or the like.

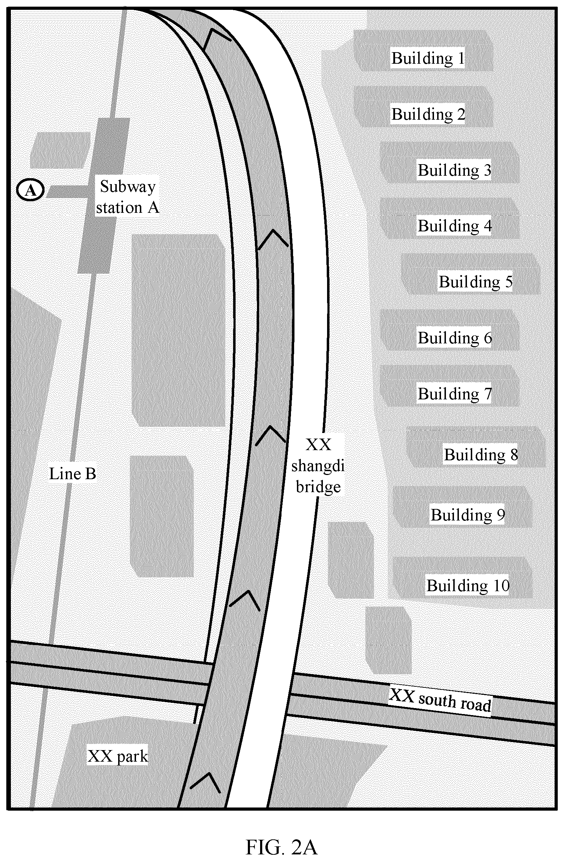

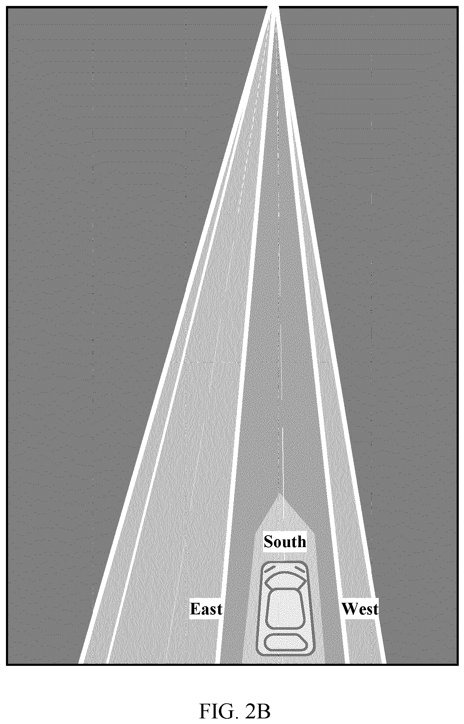

For example, as shown in FIG. 2A and FIG. 2B, when the user uses the terminal device 11 to perform map navigation, the terminal device 11 may display a full map display interface shown in FIG. 2A. When subsequently detecting that the user selects the driving state mode to perform a navigation operation, the terminal device 11 may switch from the full map display interface shown in FIG. 2A to a driving road navigation display interface shown in FIG. 2B.

It may be understood that regardless of the full map display interface shown in FIG. 2A or the driving road navigation display interface shown in FIG. 2B, information displayed on the map interface by the terminal device 11 is limited. For example, FIG. 2A is limited only to display of a basic road boundary, a bridge, a traffic condition, a text-based street name, a text-based building name, and the like, or FIG. 2B is limited only to display of a driving road, a driving direction, and the like. Therefore, display content on the display interface is simple, and user experience is poor.

In some other embodiments, the network device 13 further stores feature data corresponding to different location coordinates, and the feature data may include city feature data and road feature data. For example, the corresponding location coordinates are a road A of a city A, and the city feature data may include a tourism image based on a city in which the location coordinates are located. For example, a tourism image based on the city A may include a cartoon image, an activity image, and the like of the city A.

Further, the road feature data may include road culture data and road attraction data. The corresponding location coordinates are the road A of the city A, and the road attraction data may include a tourist attraction around a road on which the location coordinates are located. For example, tourist attractions based on the road A may include an attraction A1, an attraction A2, an attraction A3, and the like. The road culture data may include historical humanistic information of the road on which the location coordinates are located. For example, the historical humanistic information based on the road A may include cultural information of the attraction A1, historical information of the attraction A2, and the like. In some other embodiments, the road attraction data may be an architectural attraction, such as a temple or an ancient city tower, or may be a natural landscape attraction, such as a lake, a flowing river, a mountain, or a tree. This is not specifically limited.

In some embodiments, a road corresponding to location coordinates including road feature data is used as a tourist road. For example, if the road A includes road feature data of tourist attractions such as the attraction A1, the attractions A2, and the attraction A3, the road A may be used as a tourist road. The tourist road includes but is not limited to a lane, a riding lane, a sidewalk, and the like.

In some embodiments, the user may query, by using the terminal device 11, the network device 13 for content related to the tourist road. For example, when the user performs a tourism information query operation on a tourist road by using the terminal device 11, in response to the tourism information query operation, the terminal device 11 obtains the current location coordinates of the user, and initiates, to the network device 13, a task request related to the tourism information query. The network device 13 may determine, based on the received location coordinates, a tourist road on which the user is located, query corresponding feature data based on the tourist road, and return the feature data to the terminal device 11. In this way, the terminal device 11 may display, on the display, the feature data for the user to view, and the terminal device 11 may alternatively convert the feature data into voice data that is played for the user to listen, or the like.

It may be understood that in a process of performing map navigation by using the terminal device 11, if the user wants to query related tourism consultation of a tourist road on which the user is currently located, the user needs to exit the map navigation interface or the map application, and then perform query by using another search application, which affects user experience.

To resolve the foregoing technical problem, this application discloses a display method, applied to a terminal device, and the terminal device has a tourist navigation function. After detecting that a user enables a tourist navigation function, the terminal device obtains current location coordinates of the user, and determines the current location coordinates. When a determining result is that the current location coordinates are located on a tourist road, feature data (for example, the city feature data, the road culture data, and the road attraction data mentioned above) of the tourist road is obtained. In addition, a road interface for the tourist road is separately displayed, and the feature data is displayed on the road interface. In this way, the user can perform road navigation through the road interface displayed by the terminal device, and can also view, through the road interface, humanistic information of a tourist attraction related to the road, thereby improving user experience.

The terminal device may obtain road location coordinates of the tourist road from the network device in advance, and store a correspondence between the road location coordinates and the corresponding tourist road. After obtaining the current location coordinates of the user, the terminal device may determine, from the prestored correspondence, whether the current location coordinates are located on a tourist road.

In some embodiments, when a determining result is that the current location coordinates of the user are not located on any tourist road, the terminal device obtains destination location coordinates of the user, query a tourist road in a target range for the user based on the current location coordinates and the destination location coordinates, and returns a query result to the user, so that the user can choose whether to switch a navigation route. When the user performs map navigation, the terminal device can actively query the tourist road, and the user does not need to switch an interface for separate query, thereby improving user experience.

The following describes some embodiments of this application by using examples with reference to the driving scenario shown in FIG. 2A or FIG. 2B.

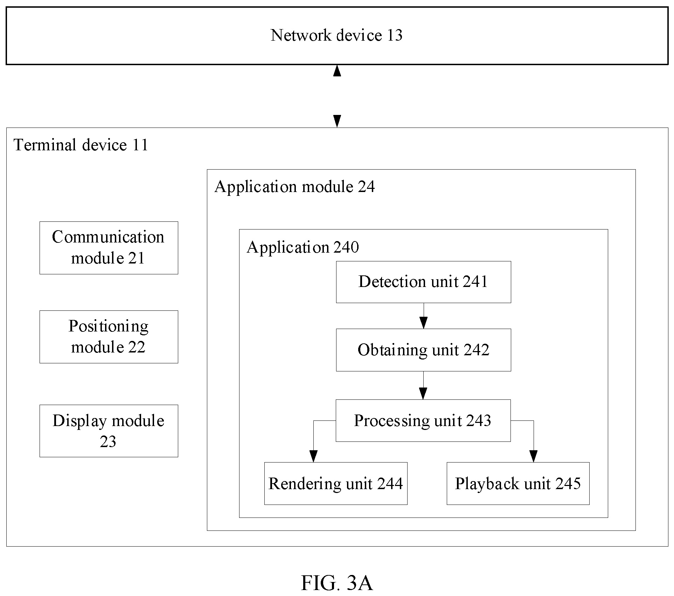

FIG. 3A is a diagram of a structure of the terminal device 11 according to some embodiments of this application. As shown in FIG. 3A, the terminal device 11 includes a communication module 21, a positioning module 22, a display module 23, and an application module 24.

In some embodiments, the communication module 21 is configured to enable the terminal device 11 to establish a communication connection to the network device 13 or another terminal device 11 in the foregoing wireless connection manner. The network device 13 stores at least the foregoing map data and the feature data that correspond to different location coordinates, and the foregoing road location coordinates of the corresponding tourist road.

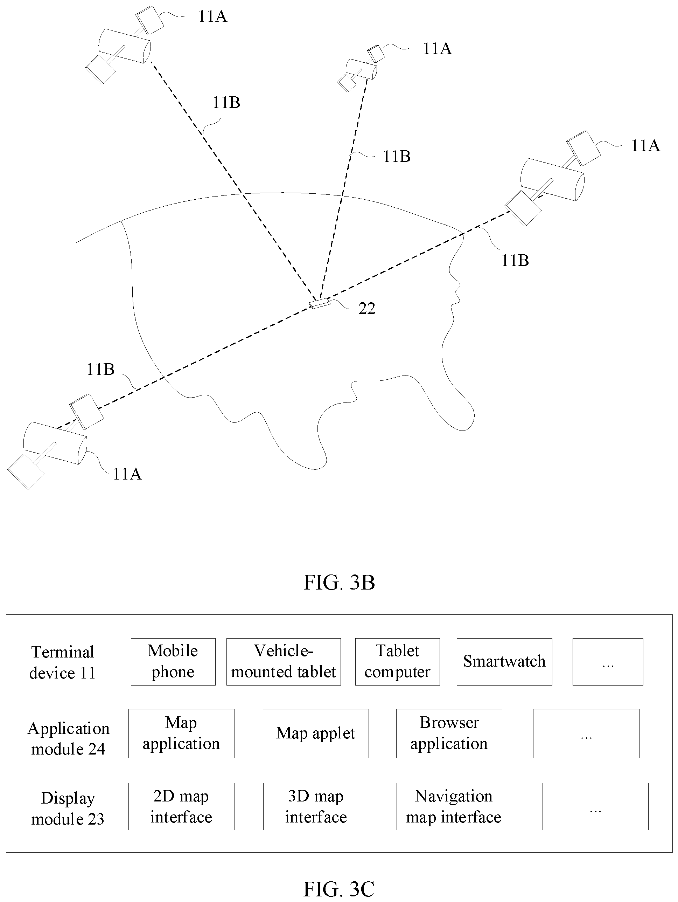

In some embodiments, the positioning module 22 may obtain current location coordinates of the terminal device 11 by using a global positioning system (Global Positioning System, GPS), a BeiDou navigation satellite system (BeiDou Navigation Satellite System, BDS), or any other positioning system. For example, as shown in FIG. 3B, the positioning module 22 may obtain broad-spectrum GPS satellite signals 11B from at least three satellites 11A by using the GPS, to obtain two-dimensional geographic coordinates of the terminal device 11. Alternatively, the positioning module 22 may obtain broad-spectrum GPS satellite signals 11B from at least four satellites 11A by using the GPS, to obtain three-dimensional geographic coordinates of the terminal device 11. This is not specifically limited.

In some embodiments, the display module 23 is configured to display a display interface of the terminal device 11, and is configured to display an application interface of any application in the application module 24. The application module 24 includes at least an application 240 having a specific map navigation function, including but not limited to a map application, a browser application, another application having a map applet, and the like. This is not specifically limited.

In some embodiments, the application 240 includes a detection unit 241, an obtaining unit 242, a processing unit 243, a rendering unit 244, and a playback unit 245.

The detection unit 241 is configured to detect that the user enables or disables the tourist navigation function. The obtaining unit 242 is configured to: obtain the current location coordinates of the terminal device 11 received by the positioning module 22, and query corresponding map data and feature data from the network device 13 based on the current location coordinates. The processing unit 243 is configured to perform data processing on the feature data, for example, convert city feature data and road attraction data into data in a text or picture format, and convert road culture data into data in a voice format. The rendering unit 244 is configured to: obtain a display layer of a tourist road, and superimpose the feature data in a text or picture format on the display layer. The playback unit 245 is configured to play the feature data in a voice format.

It may be understood that the terminal device 11 may be any device that supports a positioning and navigation function, including but not limited to a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a dedicated camera (for example, a single-lens reflex camera or a card camera), and the like.

In some embodiments, as shown in FIG. 3C, the terminal device 11 may include a mobile phone, a vehicle-mounted tablet, a tablet computer, a smartwatch, and the like. The application module 24 may include a map application, a map applet, a browser application, and the like. The display module 23 may include a 2D map interface, a 3D map interface, a navigation map interface, and the like.

It can be understood that the structure illustrated in this embodiment of this application does not constitute a specific limitation on the terminal device 11. In some other embodiments of this application, the terminal device 11 may include more or fewer components than those shown in the figure, or combine some components, or split some components, or have different component arrangements. The components shown in the figure may be implemented by hardware, software, or a combination of software and hardware.

With reference to the structure shown in FIG. 3A, an example in which a mobile phone 100 is used as the terminal device 11 is used to describe some embodiments of this application.

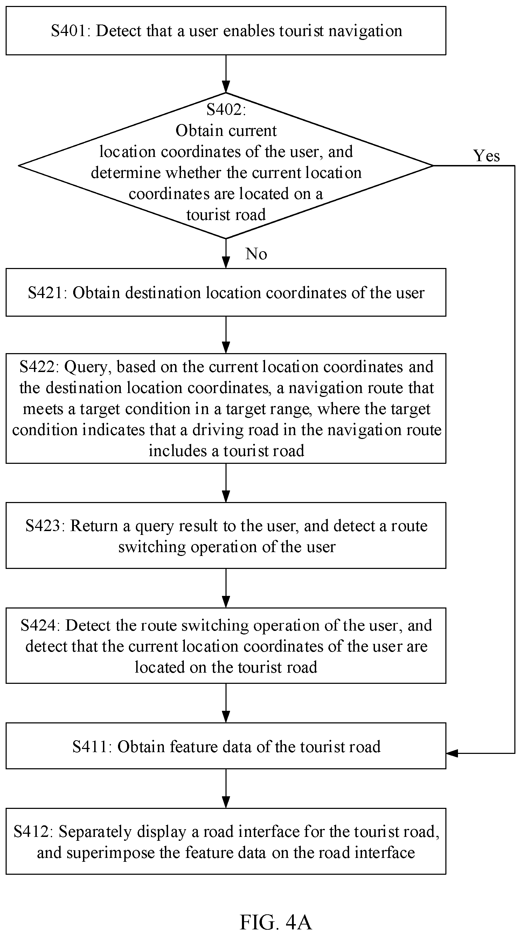

FIG. 4A is a flowchart of steps of a display method according to some embodiments of this application. As shown in FIG. 4A, the method specifically includes the following steps.

S401: The mobile phone 100 detects that the user enables tourist navigation.

In some embodiments, the user may enable map navigation by using the application 240 that has a map navigation function and that is in the mobile phone 100. When detecting, by using the detection unit 241, that the user taps to start the application 240, the application 240 may obtain current location coordinates of the user from the positioning module 22 in the mobile phone 100 by using the obtaining unit 242, obtain corresponding map data from the network device 13 based on the current location coordinates of the user, and display a map interface (as shown in FIG. 2B) of the map data on a display of the mobile phone 100 by using the display module 23 in the mobile phone 100 for the user to view, so that the user selects a route and performs query.

Further, after the user taps to start the application 240, the user may choose whether to enable tourist navigation. When the detection unit 241 detects that the user enables tourist navigation, step S402 is performed.

S402: The mobile phone 100 obtains the current location coordinates of the user, and determines whether the current location coordinates are located on a tourist road.

In some embodiments, the application 240 may obtain road location coordinates of the tourist road from the network device 13 in advance by using the communication module 21 in the mobile phone 100, and store a correspondence between the road location coordinates and the corresponding tourist road. Therefore, when obtaining the current location coordinates of the user and determining the current location coordinates, the obtaining unit 242 may perform query and determining from the prestored correspondence.

For example, when obtaining, through query, the current location coordinates from the stored road location coordinates, the obtaining unit 242 may determine that the current location coordinates are located on the tourist road corresponding to the road location coordinates. Alternatively, for example, when not obtaining, through query, the current location coordinates from the stored road location coordinates, the obtaining unit 242 determines that the current location coordinates are not located on any tourist road.

In some embodiments, when obtaining, through query, the current location coordinates from the stored road location coordinates, the obtaining unit 242 may determine that the current location coordinates of the user are located on the tourist road corresponding to the road location coordinates. In this case, step S411 is performed.

S411: The mobile phone 100 obtains feature data of the tourist road.

In some embodiments, when obtaining, through query, the current location coordinates from the stored road location coordinates, the obtaining unit 242 may determine that the current location coordinates are located on the tourist road corresponding to the road location coordinates. Then, the obtaining unit 242 may query, based on the tourist road on which the current location coordinates are located, the network device 13 for the feature data corresponding to the tourist road.

In some other embodiments, the application 240 may alternatively obtain the feature data of the tourist road from the network device 13 in advance by using the communication module 21 in the mobile phone 100, and store a correspondence between each piece of feature data and a corresponding tourist road. Then, when determining that the current location coordinates are located on a tourist road, the obtaining unit 242 may obtain corresponding feature data from the correspondence.

In some embodiments, the feature data includes city feature data, road culture data, and road attraction data. For example, a tourist road corresponding to the current location coordinates is a road A of a city A, and the city feature data may include a tourism image based on the city A such as a cartoon image and an activity image of the city A. The road attraction data may include tourist attractions based on the road A such as an attraction A1, an attraction A2, and an attraction A3. The road culture data may include historical humanistic information based on the road A such as cultural information of the attraction A1 and historical information of the attraction A2.

S412: The mobile phone 100 separately displays a road interface for the tourist road, and superimposes the feature data on the road interface.

In some embodiments, before detecting that the user enables tourist navigation, if detecting that a map interface displayed by the display module 23 is the full map display interface shown in FIG. 2A, after detecting that the user enables tourist navigation, the detection unit 241 may switch the full map display interface shown in FIG. 2A displayed by the display module 23 to the driving road navigation display interface shown in FIG. 2B.

In some other embodiments, after the obtaining unit 242 determines that the current location coordinates are located on the tourist road, the detection unit 241 may also switch the full map display interface shown in FIG. 2A displayed by the display module 23 to the driving road navigation display interface shown in FIG. 2B.

It may be understood that when the mobile phone 100 detects that the user enables tourist navigation, or determines that a current location of the user is located on a tourist road, a display mode of a map interface on the mobile phone 100 is a road navigation display interface (as shown in FIG. 2B). The road navigation display interface may be a road on which the user is currently located after the mobile phone 100 detects that the user enables tourist navigation, or may be a tourist road after the mobile phone 100 determines that the current location of the user is located on the tourist road.

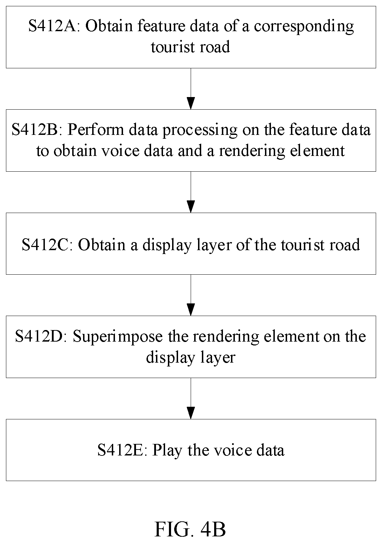

FIG. 4B is a flowchart of steps of displaying the feature data according to some embodiments of this application. As shown in FIG. 4B, the method specifically includes the following steps.

S412A: The mobile phone 100 obtains feature data of a corresponding tourist road from the network device 13.

In some embodiments, after determining that the current location coordinates are located on the tourist road, the mobile phone 100 queries the network device 13 for the feature data corresponding to the tourist road. When querying the network device 13 to obtain the feature data, the mobile phone 100 may synchronously obtain attraction location coordinates corresponding to each tourist attraction in the road attraction data in the feature data.

S412B: The mobile phone 100 performs data processing on the feature data to obtain voice data and a rendering element.

In some embodiments, the mobile phone 100 converts, by using the processing unit 243, the city feature data and the road attraction data in the feature data into a rendering element in a text or picture format, and converts the road culture data into voice data in an MP3 format.

S412C: The mobile phone 100 obtains a display layer of the tourist road.

In some embodiments, the mobile phone 100 obtains the display layer 40 of the tourist road from the display interface of the display module 23 by using the rendering unit 244.

S412D: The mobile phone 100 superimposes the rendering element on the display layer.

In some embodiments, steps S412D and S412E are described by using an example in which the road A of the city A is used as a tourist road on which the current location coordinates of the user are located. It may be understood that a tourist road corresponding to the current location coordinates is the road A of the city A, and the city feature data may include a snowflake tourism image based on the city A. The road attraction data may include a tourist attraction based on the road A such as a zoo, a botanical garden, and a museum. The road culture data may include historical humanistic information based on the road A such as historical zoo information and of museum culture information.

In some embodiments, the mobile phone 100 superimposes, on the display layer 40 by using the rendering unit 244, the city feature data of the tourism image of the city A and rendering elements of the road attraction data of the attraction A1, the attraction A2, and the attraction A3 on the road A.

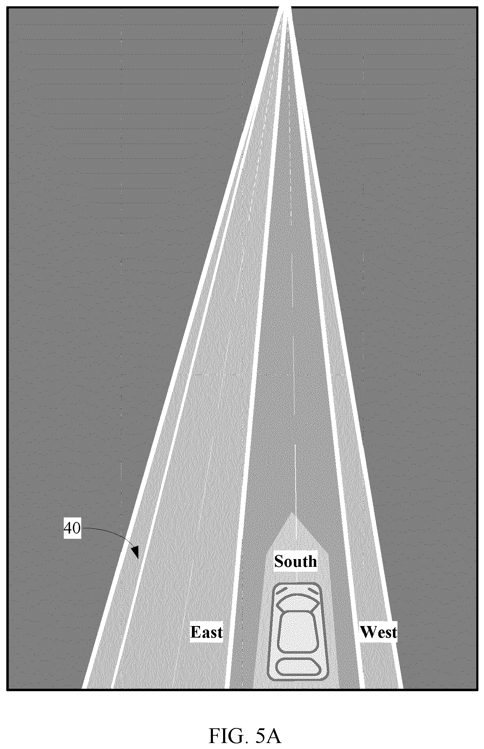

First, as shown in FIG. 5A, after obtaining the display layer 40 of the road A from the display interface of the display module 23, the rendering unit 24 separately displays the display layer 40 of the road A by using the display module 23, for example, the display layer of the road A.

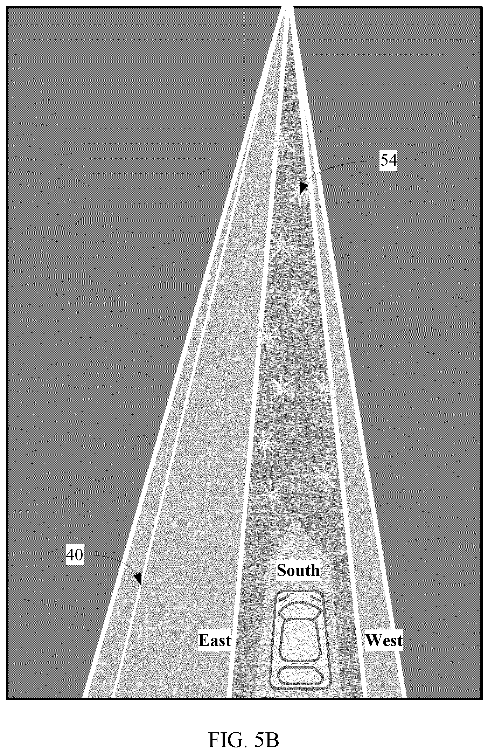

Second, as shown in FIG. 5B, after the display module 23 separately displays the display layer 40 of the road A, the rendering unit 24 tiles a rendering element 54 of a tourism image picture on the display layer 40 or on a current driving lane of the user on the display layer 40. For example, a snowflake picture is tiled on the display layer 40 or on a current driving lane of the user on the display layer 40.

Further, based on the attraction location coordinates of tourist attractions in the feature data obtained by the mobile phone 100, the rendering unit 24 may sequentially superimpose, based on corresponding attraction location coordinates and horizontal and vertical lines of the tourist road, rendering elements of the tourist attractions at intersection points between the corresponding horizontal and vertical lines and the tourist road.

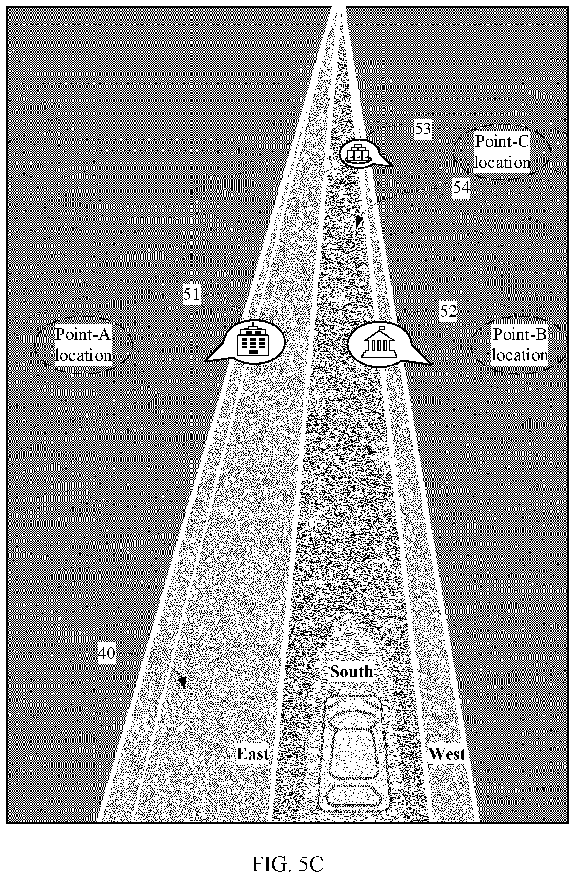

As shown in FIG. 5C, based on the current location coordinates of the user, location coordinates of the attraction A1 and location coordinates of the attraction A2 are respectively located at a point-A location and a point-B location on the left and right sides of the road A, location coordinates of the attraction A3 are on the same side as the location coordinates of the attraction A2, and the location coordinates of the attraction A3 are located at a point-C location. In this way, a rendering element 52 of the attraction A2 and a rendering element 53 of the attraction A3 are respectively superimposed at intersection points between horizontal and vertical lines of the road A, and the point-B location and the point-C location, and are located on the right side of the road A. A rendering element 51 of the attraction A1 is superimposed at an intersection point between the point-A location and the horizontal and vertical lines of the road A, and are located on the left side of the road A.

It may be understood that when driving a vehicle to the location of the rendering element 52, the user may turn to the right to see the attraction A2, and turn to the left to see the attraction A1. When driving a vehicle to the location of the rendering element 53, the user may turn to the right to see the attraction A3, and the like. For example, the attraction A1 is a botanical garden, the attraction A2 is a zoo, and the attraction A3 is a museum. When driving a vehicle to the location of the rendering element 52, the user may turn to the right to see the zoo, and turn to the left to see the botanical garden. When driving a vehicle to the location of the rendering element 53, the user may turn to the right to see the museum, and the like.

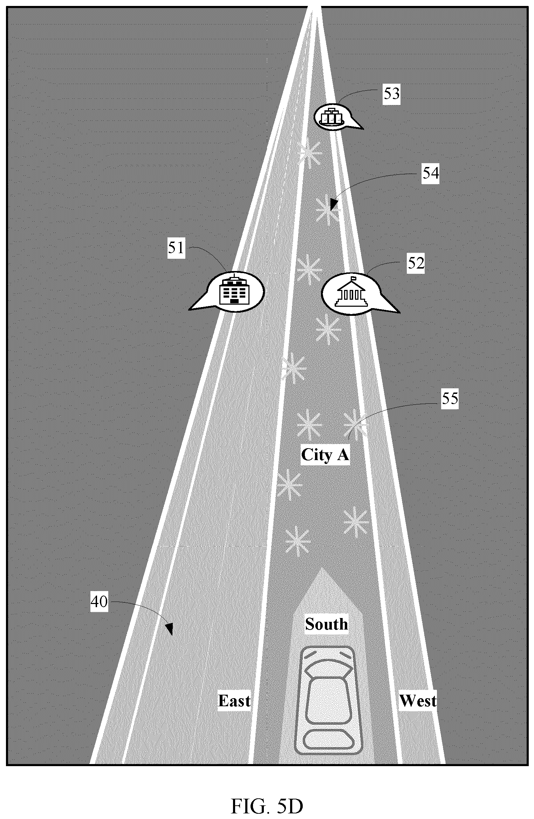

Finally, as shown in FIG. 5D, after superimposing the road attraction data, the rendering unit 24 superimposes a rendering element 55 of text of the "city A" on the front side of the driving vehicle on the display interface.

S412E: The mobile phone 100 plays the voice data.

In some embodiments, the mobile phone 100 plays voice data of the historical humanistic information such as cultural information of the attraction A1 and historical information of the attraction A2 by using the playback unit 245. For example, voice data of historical humanistic information such as zoo historical information and museum cultural information is played.

In some embodiments, after the user drives a vehicle to pass through the location of the rendering element 51/52, the rendering unit 24 may clear the rendering elements 51 and 52 from the display layer 40 based on the current location coordinates of the user, to prevent too many rendering elements on the display layer 40 from blocking road display.

It may be understood that the rendering element of the road tourist attraction displayed on the display layer 40 is located in front of the current location coordinates of the user. When the user drives a vehicle to pass through a rendering element, so that the rendering element is located behind the current location coordinates of the user, the rendering element disappears from the display layer 40, so that each rendering element on the display layer 40 can be updated in real time based on the current location coordinates of the user, thereby improving user experience.

In some embodiments, the mobile phone 100 may determine, based on a vertical distance between a horizontal line of the attraction location coordinates of each tourist attraction and a horizontal line of the current location coordinates of the user, a display manner and a display location of the rendering element of each tourist attraction on the display layer 40.

For example, the mobile phone 100 may display, on the display layer 40, a rendering element of a tourist attraction within a vertical distance of 2 kilometers or 500 meters, and determine, based on a distance of each tourist attraction, a display size of a corresponding rendering element. This avoids displaying a rendering element of a far tourist attraction or rendering elements of too many tourist attractions on the display layer 40, and correspondingly reduces time for the user to move from the current location coordinates to a location corresponding to the rendering element, so that the user can see a tourist attraction corresponding to a rendering element displayed by the mobile phone 100 in a short time, thereby improving user experience. In addition, correspondingly, display duration of the rendering element of the tourist attraction on the display layer 40 is shortened, thereby preventing the rendering element of the tourist attraction from blocking road display, and the like.

In some embodiments, when the mobile phone 100 detects that the user enables tourist navigation, or determines that a current location of the user is located on a tourist road, a display mode of a map interface on the mobile phone 100 is a road navigation display interface. In addition, when the mobile phone 100 determines that the current location of the user is located on a tourist road, a navigation road displayed on the road navigation display interface is the tourist road, so that a display layer of the tourist road can be enlarged. In this way, when corresponding feature data is subsequently superimposed on the display layer, viewing of the navigation road by the user is not affected, thereby improving road navigation safety.

It may be understood that the mobile phone 100 detects the current location coordinates of the user when the user uses the map application and enables tourist navigation. When detecting that the current location coordinates of the user match road location coordinates of a tourist road, the mobile phone 100 may determine that the user is currently located on the tourist road, and then automatically obtain feature data of the tourist road. Further, the mobile phone 100 separately displays a road interface for the tourist road on the display, and superimposes the feature data on the road interface. In this way, the user can perform road navigation through the road interface displayed by the mobile phone 100, and can also view, through the road interface, tourist attraction information related to the tourist road. In addition, the mobile phone 100 may further perform voice playback on historical humanistic information related to the tourist road, to improve user experience.

In some other embodiments, when not obtaining, through query, the current location coordinates from the stored road location coordinates, the obtaining unit 242 may determine that the current location coordinates of the user are not located on any tourist road. In this case, step S421 is performed.

S421: The mobile phone 100 obtains destination location coordinates of the user.

In some embodiments, when not obtaining, through query, the current location coordinates from the stored road location coordinates, the obtaining unit 242 may determine that the user currently does not drive on any tourist road.

It may be understood that although the obtaining unit 242 determines that the user currently does not drive on any tourist road, because the user enables tourist navigation, it may indicate that the user has a requirement for a tourist road, and a navigation route that includes a tourist road in a target range may be queried based on the current location coordinates of the user and the destination location coordinates of the user, so that the user switches and selects a route.

S422: The mobile phone 100 queries, based on the current location coordinates and the destination location coordinates, a navigation route that meets a target condition in the target range, where the target condition indicates that a driving road in the navigation route includes a tourist road.

In some embodiments, the target range is determined based on a dynamic threshold K and a distance L between the current location coordinates and destination location coordinates.

For example, the target range may be in a semi-circle range of 90 degrees to the left and right or may be in a sector range of 30 degrees to each of the left and right, which is in a direction of a connection line between the current location coordinates and a destination location and is obtained by using a product of the distance L and the dynamic threshold K as a radius. This is not specifically limited.

In some embodiments, the dynamic threshold K is any constant greater than 0 and less than or equal to 1. Long driving time for the user to switch a navigation route due to an excessively large target range can be avoided by limiting the dynamic threshold K. It may be understood that a queried target range is limited by using the dynamic threshold K, and driving time of a navigation route obtained through query is also limited by using the dynamic threshold K.

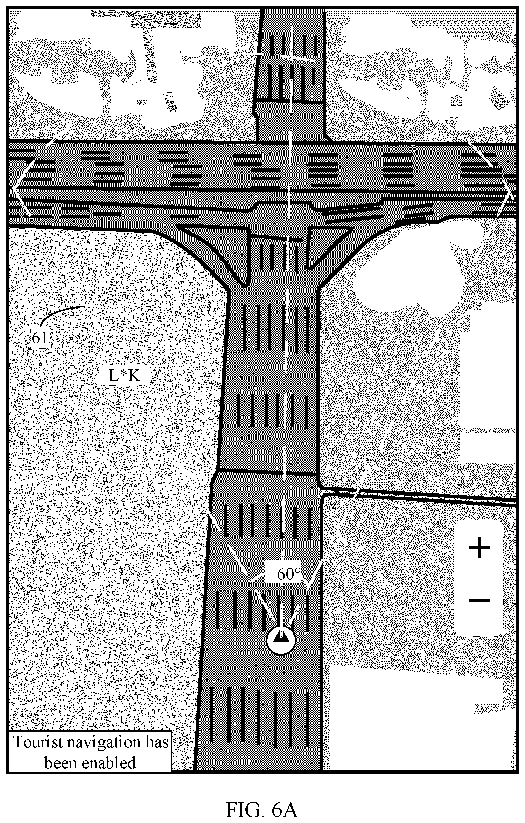

For example, as shown in FIG. 6A, the target range may be a sector 61 about 30 degrees to the left and right, which is in the direction of the connection line between the current location coordinates and the destination location coordinates and which is obtained by using the product of a distance L between the current location coordinates and a destination location and the dynamic threshold K as a radius.

In some embodiments, a value of the dynamic threshold K may be determined based on a value of the distance L. For example, when the distance L ranges from 0 to 5 kilometers, the dynamic threshold K is 0.2; or when the distance L ranges from 5 to 10 kilometers, the dynamic threshold K is 0.5. This is not specifically limited.

In some other embodiments, when the obtaining unit 242 does not obtain, through query, the destination location coordinates, that is, the user uses the map application to view only a navigation direction, but does not enter the destination location coordinates to perform route navigation, the obtaining unit 242 queries a tourist road in the target range based on a direction in which the user drives a vehicle. The target range may be a tourist road in a range such as a distance of 2 kilometers or 10 kilometers from the current location coordinates, or the target range may be a tourist road in a range such as driving time of 10 minutes or 20 minutes from the current location coordinates. This is not specifically limited.

S423: The mobile phone 100 returns a query result to the user, and detects a route switching operation of the user.

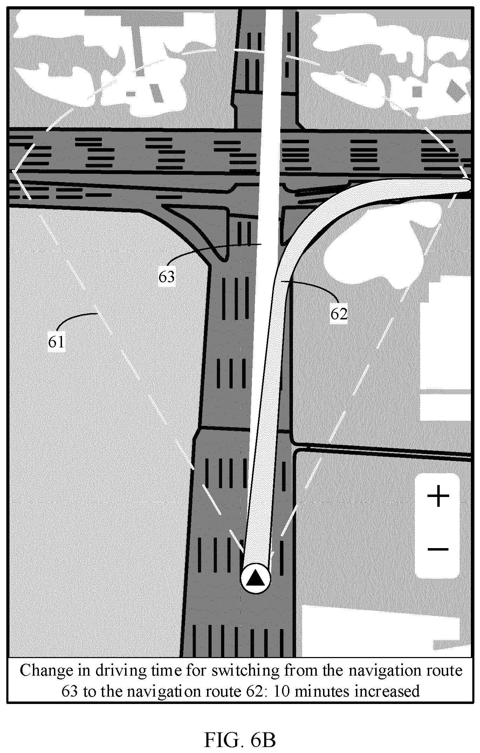

In some embodiments, as shown in FIG. 6B, a navigation route 62 including a tourist road is obtained through query based on the sector 61, and an original navigation route 63 and the navigation route 62 newly obtained through query are displayed on the display interface. In addition, the mobile phone 100 calculates, by using the processing unit 243, driving time increased by the navigation route 62 relative to the navigation route 63, and prompts the user on the display interface of the mobile phone 100.

In some other embodiments, the mobile phone 100 may alternatively respectively calculate driving time of the navigation route 63 and that of the navigation route 62 by using the processing unit 243, and prompt the user of the driving time of the navigation route 63 and that of the navigation route 62 on the display interface of the mobile phone 100.

S424: The mobile phone 100 detects the route switching operation of the user, and detects that the current location coordinates of the user are located on the tourist road.

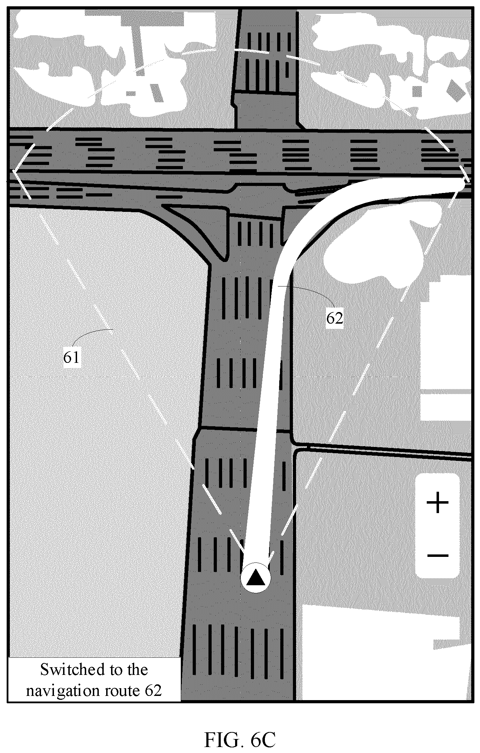

In some embodiments, as shown in FIG. 6C, when the user chooses to switch from the navigation route 63 to the navigation route 62 for driving, the navigation route 62 is separately displayed on the display interface.

In some embodiments, after the user switches to the navigation route 62, the mobile phone 100 detects the current location coordinates of the user. When obtaining the current location coordinates by querying stored road location coordinates of the tourist road included in the navigation route 62, the mobile phone 100 may determine that the current location coordinates of the user are on the tourist road corresponding to the navigation route 62. In this case, step S411 is performed.

It may be understood that after step S411 is performed, the mobile phone 100 may obtain feature data of the tourist road, to separately display a road interface for the tourist road, and may superimpose the feature data on the road interface. In this way, the user can perform road navigation through the road interface displayed by the mobile phone 100, and can also view, through the road interface, tourist attraction information related to the tourist road.

It may be understood that the mobile phone 100 detects the current location coordinates of the user when the user uses the map application and enables tourist navigation. When detecting that the current location coordinates of the user are not located on any tourist road, the mobile phone 100 may obtain destination location coordinates of the user, actively query a tourist road in the target range for the user based on the current location coordinates and the destination location coordinates, and return a query result to the user, so that the user can choose whether to switch a navigation route. When the user performs map navigation, the mobile phone 100 can actively query the tourist road, and the user does not need to switch an interface for separate query, thereby improving user experience.

With reference to the flowchart shown in FIG. 4A, the following separately explains and describes a scenario in which the current location coordinates of the user are located on the tourist road and a scenario in which the current location coordinates of the user are not located on the tourist road.

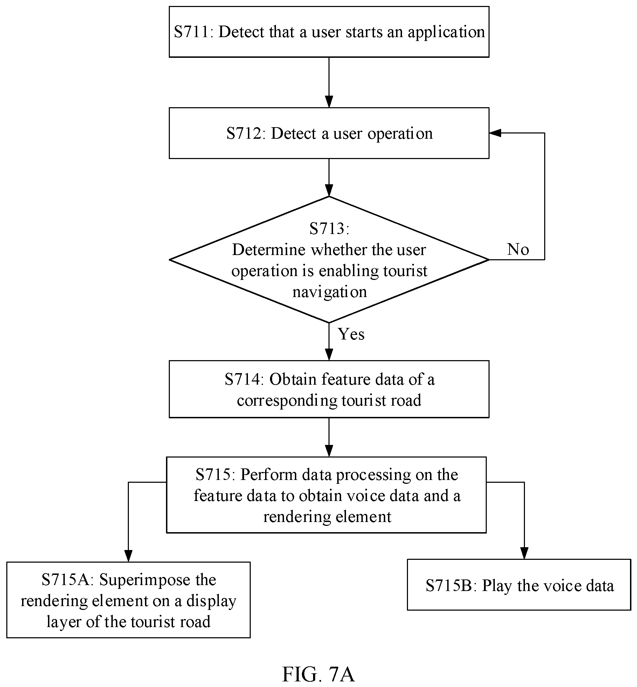

FIG. 7A is a flowchart of steps of navigation display according to some embodiments of this application. As shown in FIG. 7A, the method specifically includes the following steps.

S711: The mobile phone 100 detects that the user starts the application 240.

In some embodiments, after the mobile phone 100 detects that the user starts the map application 240, an application interface of the map application 240 may be displayed through the display module 23 of the mobile phone 100. In addition, when detecting, by using the detection unit 241, that the user taps to start the application 240, the application 240 may obtain current location coordinates of the user from the positioning module 22 in the mobile phone 100 by using the obtaining unit 242, obtain corresponding map data from the network device 13 based on the current location coordinates of the user, and display a map interface (as shown in FIG. 2B) of the map data on a display of the mobile phone 100 by using the display module 23 in the mobile phone 100 for the user to view, so that the user selects a route and performs query.

S712: The mobile phone 100 detects a user operation.

In some embodiments, after the user taps to start the application 240, the user may tap an enabling button of tourist navigation to enable tourist navigation, or the user may enable tourist navigation in a voice conversation manner.

S713: The mobile phone 100 determines whether the user operation is enabling tourist navigation.

In some embodiments, when the mobile phone 100 detects, by using the detection unit 241, that the user operation is not the operation of enabling tourist navigation, or no user operation is detected, step S712 is performed. In some other embodiments, when the detection unit 241 detects that the user operation is the operation of enabling tourist navigation, step S714 is performed.

S714: The mobile phone 100 obtains feature data of a corresponding tourist road from the network device 13.

In some embodiments, the application 240 may obtain road location coordinates of the tourist road from the network device 13 in advance by using the communication module 21 in the mobile phone 100, and store a correspondence between the road location coordinates and the corresponding tourist road. Therefore, when obtaining the current location coordinates of the user and determining the current location coordinates, the obtaining unit 242 may perform query and determining from the prestored correspondence.

In some embodiments, when obtaining, through query, the current location coordinates from the stored road location coordinates, the obtaining unit 242 may determine that the current location coordinates of the user are located on the tourist road corresponding to the road location coordinates. In this case, step S715 is performed.

S715: The mobile phone 100 performs data processing on the feature data to obtain voice data and a rendering element.

In some embodiments, the mobile phone 100 converts, by using the processing unit 243, the city feature data and the road attraction data in the feature data into a rendering element in a text or picture format, and converts the road culture data into voice data in an MP3 format.

S715A: The mobile phone 100 superimposes the rendering element on the display layer of the tourist road.

In some embodiments, the mobile phone 100 obtains the display layer of the tourist road from the display interface of the display module 23 by using the rendering unit 244, and superimposes rendering elements of the city feature data and the road scenic spot data on the display layer. For a specific superimposition process, refer to related descriptions of the step flowchart in FIG. 4B and the diagrams in FIG. 5A to FIG. 5D. Details are not described herein again.

S715B: The mobile phone 100 plays the voice data.

In some embodiments, the mobile phone 100 plays the voice data of the road culture data by using the playback unit 245.

It may be understood that the mobile phone 100 detects the current location coordinates of the user when the user uses the map application and enables tourist navigation. When detecting that the current location coordinates of the user match road location coordinates of a tourist road, the mobile phone 100 may determine that the user is currently located on the tourist road, and then automatically obtain feature data of the tourist road. Further, the mobile phone 100 separately displays a road interface for the tourist road on the display, and superimposes the feature data on the road interface. In this way, the user can perform road navigation through the road interface displayed by the mobile phone 100, and can also view, through the road interface, tourist attraction information related to the tourist road. In addition, the mobile phone 100 may further perform voice playback on historical humanistic information related to the tourist road, to improve user experience.

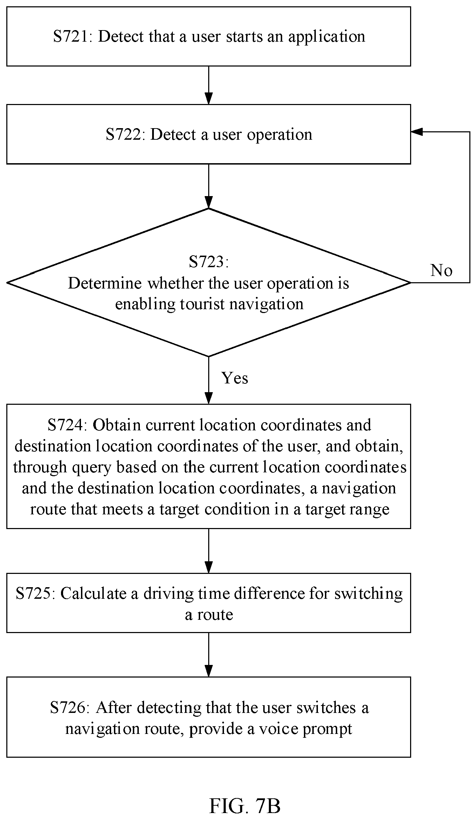

FIG. 7B is a flowchart of steps of another navigation display according to some embodiments of this application. As shown in FIG. 7B, the method specifically includes the following steps.

S721: The mobile phone 100 detects that the user starts the application 240.

In some embodiments, after the mobile phone 100 detects that the user starts the map application 240, an application interface of the map application 240 may be displayed through the display module 23 of the mobile phone 100. In addition, when detecting, by using the detection unit 241, that the user taps to start the application 240, the application 240 may obtain current location coordinates of the user from the positioning module 22 in the mobile phone 100 by using the obtaining unit 242, obtain corresponding map data from the network device 13 based on the current location coordinates of the user, and display a map interface (as shown in FIG. 2B) of the map data on a display of the mobile phone 100 by using the display module 23 in the mobile phone 100 for the user to view, so that the user selects a route and performs query.

S722: The mobile phone 100 detects a user operation.

In some embodiments, after the user taps to start the application 240, the user may tap an enabling button of tourist navigation to enable tourist navigation, or the user may enable tourist navigation in a voice conversation manner.

S723: The mobile phone 100 determines whether the user operation is enabling tourist navigation.

In some embodiments, when the mobile phone 100 detects, by using the detection unit 241, that the user operation is not the operation of enabling tourist navigation, or no user operation is detected, step S722 is performed. In some other embodiments, when the detection unit 241 detects that the user operation is the operation of enabling tourist navigation, step S724 is performed.

S724: The mobile phone 100 obtains the current location coordinates and the destination location coordinates of the user, and obtains, through query based on the current location coordinates and the destination location coordinates, a navigation route that meets a target condition in the target range.

In some embodiments, the target condition indicates that a driving road of the navigation route includes a tourist road. As shown in FIG. 6A, the target range may be a sector 61 about 30 degrees to each of the left and right, which is in the direction of the connection line between the current location coordinates and the destination location coordinates and which is obtained by using the product of a distance L between the current location coordinates and a destination location and the dynamic threshold K as a radius.

S725: The mobile phone 100 calculates a driving time difference for switching a route.

In some embodiments, as shown in FIG. 6B, a navigation route 62 including a tourist road is obtained through query based on the sector 61, and an original navigation route 63 and the navigation route 62 newly obtained through query are displayed on the display interface. In addition, the mobile phone 100 calculates, by using the processing unit 243, driving time increased by the navigation route 62 relative to the navigation route 63, and prompts the user on the display interface of the mobile phone 100. For a specific process of querying the navigation route, refer to related descriptions of the foregoing steps S421 to S423 and the diagrams of FIG. 6A to FIG. 6C. Details are not described herein again.

S726: After detecting that the user switches a navigation route, the mobile phone 100 provides a voice prompt.

In some embodiments, as shown in FIG. 6C, when the user chooses to switch from the navigation route 63 to the navigation route 62 for driving, the navigation route 62 is displayed on the display interface, and the mobile phone 100 provides, by using the playback unit 245, a voice prompt indicating that the navigation route is successfully switched.

It may be understood that the mobile phone 100 detects the current location coordinates of the user when the user uses the map application and enables tourist navigation. When detecting that the current location coordinates of the user are not located on any tourist road, the mobile phone 100 may obtain destination location coordinates of the user, actively query a tourist road in the target range for the user based on the current location coordinates and the destination location coordinates, and return a query result to the user, so that the user can choose whether to switch a navigation route. When the user performs map navigation, the mobile phone 100 can actively query the tourist road, and the user does not need to switch an interface for separate query, thereby improving user experience.

In some embodiments, the mobile phone 100 determines that the current location coordinates of the user are located on a tourist road corresponding to the road location coordinates, separately displays a road interface for the tourist road on the display, and superimposes feature data on the road interface. The mobile phone 100 may further continue to obtain the destination location coordinates of the user, and query, based on the current location coordinates and the destination location coordinates, a navigation route that meets the target condition in the target range. Alternatively, when not obtaining the destination location coordinates of the user, the mobile phone 100 may query, based on the current location coordinates, a navigation route that meets the target condition in the target range, and return a navigation route obtained through query to the user for selection among a plurality of routes.

It may be understood that when the mobile phone 100 queries, based on the current location coordinates and/or the destination location coordinates, the navigation route that meets the target condition in the target range, the current location coordinates of the user may be located on a tourist road, or may be located on any road of another non-tourist road. That is, when the current location coordinates of the user are located on the tourist road A, the mobile phone 100 may actively query another tourist road for the user, for example, a tourist road B, and return a query result to the user, so that the user selects between the tourist road A and the tourist road B, to provide diversified tourist road recommendations for the user, thereby improving user experience.

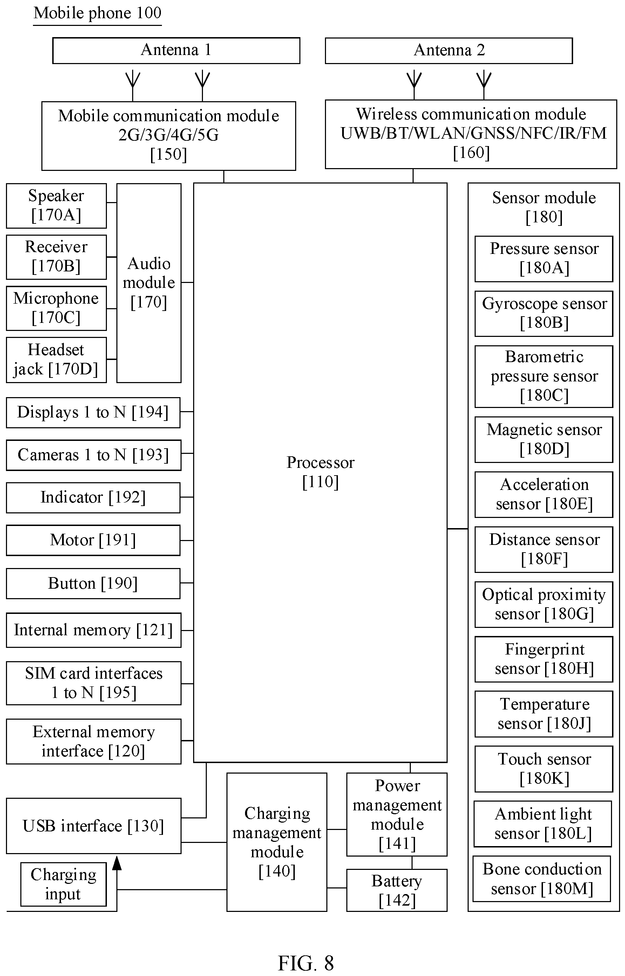

FIG. 8 is a diagram of a structure of a mobile phone 100 according to some embodiments of this application.

It may be understood that the structure shown in this embodiment of this application does not constitute a specific limitation on the mobile phone 100. In some other embodiments of this application, the mobile phone 100 may include more or fewer components than those shown in the figure, combine some components, split some components, or have different component arrangements. The components shown in the figure may be implemented by hardware, software, or a combination of software and hardware.

As shown in FIG. 8, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on an instruction operation code and a time sequence signal, to complete control of instruction reading and instruction execution. In some embodiments, the processor 110 may execute an instruction corresponding to the display method provided in the foregoing embodiments.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the foregoing memory. This avoids repeated access, reduces waiting time of the processor 110, and improves processing efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface conforming to a USB standard specification, and may be specifically a mini USB interface, a micro USB interface, a USB Type-C interface, or the like. The USB interface 130 may be configured to connect to a charger to charge the mobile phone 100, or may be configured to transmit data between the mobile phone 100 and a peripheral device, or may be configured to connect to a headset for playing audio by using the headset. The interface may be further configured to connect to another terminal device, for example, an AR device.

It may be understood that an interface connection relationship between the modules shown in this embodiment of this application is merely an example for description, and does not constitute a limitation on the structure of the mobile phone 100. In some other embodiments of this application, the mobile phone 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the mobile phone 100. The charging management module 140 may further supply power to the mobile phone 100 by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the mobile phone 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the mobile phone 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the mobile phone 100 and that includes 2G/3G/4G/5G/6G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then is transferred to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the mobile phone 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the mobile phone 100, the antenna 1 and the mobile communication module 150 are coupled, and the antenna 2 and the wireless communication module 160 are coupled, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), 5G and subsequent evolution standards, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite based augmentation system, SBAS).

The mobile phone 100 implements a display function by using the GPU, the display 194, the application processor, and the like. The GPU is a microprocessor for image processing, and is connected to the display 194 and the application processor. The GPU is configured to: perform mathematical and geometric computation; and render an image. The processor 110 may include one or more GPUs that execute program instructions to generate or change display information.

The display 194 is configured to display an image, a video, and the like. The display 194 includes a display panel. In some embodiments, the mobile phone 100 may include one or N displays 194, where N is a positive integer greater than 1.

The mobile phone 100 can implement a photographing function by using the ISP, the camera 193, the video codec, the GPU, the display 194, the application processor, and the like. The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 100 may include one or N cameras 193, where N is a positive integer greater than 1.

The digital signal processor is configured to process a digital signal, and may process another digital signal in addition to the digital image signal. For example, when the mobile phone 100 selects a frequency, the digital signal processor is configured to perform Fourier transform on frequency energy.

The video codec is configured to compress or decompress a digital video. The mobile phone 100 may support one or more video codecs. In this way, the mobile phone 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information by emulating a biological neural network structure, for example, by emulating a mode of transfer between human-brain neurons, and may further perform self-learning constantly. The NPU can implement applications such as intelligent cognition of the mobile phone 100, for example, image recognition, facial recognition, speech recognition, and text understanding.

The external memory interface 120 may be configured to connect to an external storage card, for example, a microSD card, to extend a storage capability of the terminal device 100. The external memory card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required for at least one function (such as a sound playing function and an image display function), and the like. The data storage area may store data (such as audio data and an address book) and the like created during use of the mobile phone 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in a memory disposed in the processor, to perform various function applications of the mobile phone 100 and data processing. For example, in some embodiments, the internal memory 121 may be configured to temporarily store an instruction of the display method provided in the foregoing embodiments.

The mobile phone 100 may implement an audio function such as music playing and recording by using the audio module 170, the speaker 170A, the receiver 170B, the microphone 170C, the headset jack 170D, the application processor, and the like.

The SIM card interface 195 is configured to connect to a SIM card. The SIM card may be inserted into the SIM card interface 195 or pulled out of the SIM card interface 195, to implement contact with or separation from the mobile phone 100. The mobile phone 100 may support one or N SIM card interfaces, where N is a positive integer greater than 1. The SIM card interface 195 can support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The mobile phone 100 interacts with a network by using the SIM card, to implement functions such as calling and data communication. In some embodiments, the mobile phone 100 uses an eSIM, that is, an embedded SIM card. The eSIM card may be embedded in the mobile phone 100, and cannot be separated from the mobile phone 100.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in the device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolving technical issues proposed in this application. In addition, to highlight an innovative part of this application, a unit/module that is not closely related to resolving the technical problem provided in this application is not described in the foregoing device embodiments of this application. This does not mean that there are no other units/modules in the foregoing device embodiments.

It should be noted that in the examples and the specification of this patent, relational terms such as first and second are merely used to distinguish one entity or operation from another, and do not necessarily require or imply any such actual relationship or order between these entities or operations. Moreover, terms "include", "comprise", or any other variants thereof are intended to cover a non-exclusive inclusion, so that a process, a method, an article, or a device that includes a list of elements includes those elements, and also includes other elements which are not expressly listed, or further includes elements inherent to this process, method, article, or device. Without more limitations, an element limited by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in form and detail without departing from the scope of this application.

## Claims

1. A display method, applied to a terminal device and comprising:
displaying, by the terminal device, a first navigation interface, wherein the first navigation interface comprises a first road; and
moving, by the terminal device, to a first location in a moving process, and displaying, on the first road on the first navigation interface, a first road feature corresponding to the first location.

2. The method according to claim 1, wherein the first road feature has a first feature location; and
the method further comprises:
determining, based on the first feature location, a first display location of the corresponding first road feature on the first road on the first navigation interface.

3. The method according to claim 2, wherein the first display location of the first road feature on the first road on the first navigation interface is determined in at least one of the following manners:
determining, based on a connection line intersection point between the first feature location and the first road, the first display location of the corresponding first road feature on the first road on the first navigation interface; and
determining, based on a first distance between the first feature location and the first location, the first display location of the corresponding first road feature on the first road on the first navigation interface.

4. The method according to any one of claims 1 to 3, wherein the moving, by the terminal device, to a first location in a moving process, and displaying, on the first road on the first navigation interface, a first road feature corresponding to the first location comprises:
the first distance between the first location and the first feature location of the first road feature meets a first distance condition.

5. The method according to claim 1, further comprising:
moving, by the terminal device, from the first location to a second location, and hiding the first road feature displayed on the first road on the first navigation interface.

6. The method according to claim 1, further comprising:
the first location is located on the first road.

7. The method according to claim 1, wherein the first road comprises the first road feature and a second road feature; and
the method further comprises:
displaying, on the first road on the first navigation interface, the first road feature corresponding to the first location and the second road feature.

8. The method according to claim 7, wherein the second road feature comprises at least one of the following features: a city image feature, a city activity feature, a city tourism feature, a city historical feature, and a city humanistic feature.

9. The method according to claim 1, wherein the first road feature comprises at least one of the following features: an architectural attraction feature and a natural landscape attraction feature.

10. The method according to claim 1, further comprising:
the first road meets a first road condition, and the first road condition indicates that at least one first road feature is comprised.

11. The method according to claim 1, wherein that the first navigation interface comprises a first road comprises:
the first road is separately displayed on the first navigation interface.

12. The method according to claim 1, wherein before the first navigation interface comprises the first road, the method comprises:
querying, based on a current location of the terminal device, a first road that meets the first road condition in a first range; and
displaying the query result on the first navigation interface.

13. The method according to claim 1, wherein before the first navigation interface comprises the first road, the method comprises:
displaying a first navigation route on the first navigation interface;
querying, based on the first navigation route, a second navigation route that meets a first query condition in a first range, wherein the first query condition indicates that the second navigation route comprises the first road; and
displaying the query result on the first navigation interface.

14. The method according to claim 13, wherein the displaying the query result on the first navigation interface comprises:
displaying the second navigation route and first navigation time of the second navigation route on the first navigation interface; or
displaying the second navigation route, first navigation time of the second navigation route, and the first navigation time of the second navigation route on the first navigation interface; or
displaying the second navigation route, and a time difference between first navigation time of the second navigation route and the first navigation time of the second navigation route on the first navigation interface.

15. The method according to claim 13, wherein the first range is determined in the following manner:
determining the first range based on an end location of the first navigation route and a current location of the terminal device.

16. The method according to claim 13, wherein the first range is determined in the following manner:
obtaining a second distance between an end location of the first navigation route and a current location of the terminal device; and
determining the first range based on a first threshold and the second distance.

17. The method according to claim 16, wherein the first threshold is determined in the following manner:
determining the first threshold based on the second distance.

18. A computer-readable storage medium, wherein the readable storage medium stores instructions, and when the instructions are executed on a terminal device, the terminal device is enabled to implement the method according to any one of claims 1 to 17.

19. A terminal device, comprising:
a memory, configured to store instructions executed by one or more processors of the terminal device; and
a processor, wherein the processor is one of the processors of the terminal device, and is configured to execute the instructions stored in the memory, to implement the method according to any one of claims 1 to 17.
